# EUROPEAN PATENT APPLICATION

(11) **EP 4 733 176 A1**
(43) Date of publication of application: **29.04.2026**
(21) Application number: 25206847.3
(22) Date of filing: 06.10.2025
(51) Int. Cl.: B62D 13/06, B62D 15/02

(54) **PARKING ASSISTANCE DEVICE**

(30) Priority: 25.10.2024 JP 2024188091
(71) Applicant: AISIN CORPORATION, Aichi 448-8650 (JP)
(72) Inventor: SATO, Daisuke, Kariya, Aichi, 448-8650 (JP)
(74) Representative: TBK

(57) **Abstract**

Provided is a parking assistance device (1) for assisting in parking a towing vehicle (2) and a trailer (3) to be towed by the towing vehicle when the towing vehicle and the trailer are connected to each other. The parking assistance device acquires a parking start position and a parking target position, generates a travel trajectory for parking from the parking start position to the parking target position, the travel trajectory including a forward section in which a hitch angle, which is a connection angle between the towing vehicle and the trailer, is adjusted by moving forward along a forward trajectory (41) from the parking start position, and a backward section in which backward movement is performed to the parking target position after the forward section, and sets, on the forward trajectory, a recommended turning position at which a turning operation is recommended to be performed. In the generation of the travel trajectory, the forward trajectory is generated such that, when the towing vehicle travels along the forward trajectory, the hitch angle does not exceed a limit angle at which the backward movement is performable even at a position beyond the recommended turning position.

## Description

### TECHNICAL FIELD

This disclosure relates to a parking assistance device that performs parking assistance of a vehicle.

### BACKGROUND DISCUSSION

In related art, as parking assistance of a vehicle, there has been known to calculate a travel trajectory for parking and perform guidance and vehicle control such that parking is performed according to the calculated travel trajectory. Here, a travel trajectory particularly when performing backward parking is a travel trajectory in which the vehicle first moves forward to a suitable turning position for entering a parking target position as a parking target such as a parking space, then switches to backward movement at the turning position and moves back to the parking target position, but when providing the above-described parking assistance to a towing vehicle (tractor) towing a towed vehicle (hereinafter referred to as trailer), it is necessary to set the above-described travel trajectory taking into consideration not only a behavior of the towing vehicle but also a behavior of the trailer.

For example, JP 2019-87875A proposes, as a method for calculating a guide path for guiding a trailer to a parking space in parking assistance for a towing vehicle that tows the trailer, a technique for calculating a guide path for a towing vehicle capable of moving a trailer from a guidance reference point, which indicates a current position of the towing vehicle, to a guidance target point in the shortest distance with the minimum number of turns, and allowing the trailer to move into a parking space in a specified attitude.

Here, as described in JP 2019-87875A (paragraph 0042, Fig. 5) (Reference 1), a travel trajectory until backward parking into the parking space is roughly divided into a forward section in which forward movement is performed to a turning position at which a traveling direction is turned for backward movement after parking is started, and a backward section in which the backward movement is performed from the turning position to the parking space. When parking assistance is performed based on the generated travel trajectory, parking assistance is also known in which only a steering operation is automatically performed, and accelerator and brake operations are manually performed instead of being automatically performed.

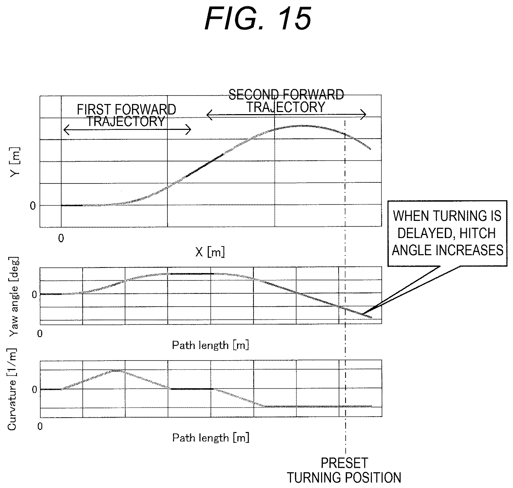

In such parking assistance in which the accelerator and brake operations are manually performed, when an occupant operation is delayed, an actual turning position may be beyond a turning position preset by system. Here, Fig. 15 is a diagram illustrating an example of a travel trajectory (hereinafter, referred to as a forward trajectory) of a forward section that is generated when parking assistance in related art is performed, and a change in curvature and connection angle (hitch angle) between a towing vehicle and a trailer when traveling along the forward trajectory. As illustrated in Fig. 15, the forward trajectory includes a first forward trajectory in which forward movement is performed with a first direction away from a parking target position as a turning direction, and a second forward trajectory in which the forward movement is performed with a second direction different from the first direction as a turning direction to adjust a hitch angle after the first forward trajectory. In the related art, when the turning position is set in advance, the turning position is set at a position on the second forward trajectory where a target hitch angle is achieved, but when the occupant is delayed in stopping the vehicle, an absolute value of the hitch angle becomes larger than a target value as the forward movement is performed. As a result, the hitch angle may be too large at the time of making a turn, and the backward movement may not be performed.

A need thus exists for a parking assistance device capable of generating a forward trajectory such that a hitch angle does not exceed a limit angle at which the backward movement is performable even when an occupant operation is delayed and an actual turning position is beyond a preset turning position.

### SUMMARY

According to an aspect of the disclosure, there is provided a parking assistance device for assisting in parking a towing vehicle and a trailer to be towed by the towing vehicle when the towing vehicle and the trailer are connected to each other. The parking assistance device acquires a parking start position and a parking target position, generates a travel trajectory for parking from the parking start position to the parking target position, the travel trajectory including a forward section in which a hitch angle, which is a connection angle between the towing vehicle and the trailer, is adjusted by moving forward along a forward trajectory from the parking start position, and a backward section in which backward movement is performed to the parking target position after the forward section, and sets, on the forward trajectory, a recommended turning position at which a turning operation is recommended to be performed. In the generation of the travel trajectory, the forward trajectory is generated such that, when the towing vehicle travels along the forward trajectory, the hitch angle does not exceed a limit angle at which the backward movement is performable even at a position beyond the recommended turning position.

Regarding the generation of the travel trajectory, the "travel trajectory of the forward section" and the "travel trajectory of the backward section" do not necessarily have to be generated at the same timing, and the "travel trajectory of the forward section" may be generated first to travel in the forward section, and then the "travel trajectory of the backward section" may be generated to travel in the backward section.

The "turning operation" is, for example, an operation of switching the vehicle from a forward movable state to a backward movable state. The operation of switching the vehicle from the forward movable state to the backward movable state may be performed manually (by an occupant) or automatically.

According to the parking assistance device of this disclosure having the above configuration, a forward trajectory can be generated such that a hitch angle does not exceed a limit angle at which backward movement is performable even when an occupant operation is delayed and an actual turning position is beyond a preset recommended turning position. As a result, even when the turning position is beyond the recommended turning position, the parking assistance can be continued until parking is completed without being interrupted halfway.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a diagram illustrating a towing vehicle and a trailer according to the present embodiment;
Fig. 2 is an enlarged view of a vicinity of a towing device of the towing vehicle;
Fig. 3 is a diagram illustrating movement of the towing vehicle and the trailer when a hitch ball and a coupler are connected;
Fig. 4 is a block diagram illustrating a configuration of a parking assistance device according to the present embodiment;
Fig. 5 is a flowchart of a parking assistance processing program according to the present embodiment;
Fig. 6 is a diagram illustrating an entire travel trajectory from a parking start position to a parking target position;
Fig. 7 is a diagram illustrating a limit angle of a hitch angle;
Fig. 8 is a diagram illustrating a pattern A as a method for generating a travel trajectory of a forward section in the travel trajectory from the parking start position to the parking target position;
Fig. 9 is a diagram illustrating the generated travel trajectory of the forward section and a transition of the hitch angle;
Fig. 10 is a diagram illustrating a steady state;
Fig. 11 is a diagram illustrating a pattern B as the method for generating the travel trajectory of the forward section in the travel trajectory from the parking start position to the parking target position;
Fig. 12 is a diagram illustrating a pattern C as the method for generating the travel trajectory of the forward section in the travel trajectory from the parking start position to the parking target position;
Fig. 13 is a diagram illustrating candidate turning positions;
Fig. 14 is a diagram illustrating a method for determining a turning position from the candidate turning positions; and
Fig. 15 is a diagram illustrating a problem of the related art.

### DETAILED DESCRIPTION

### Description of Towing Vehicle and Trailer

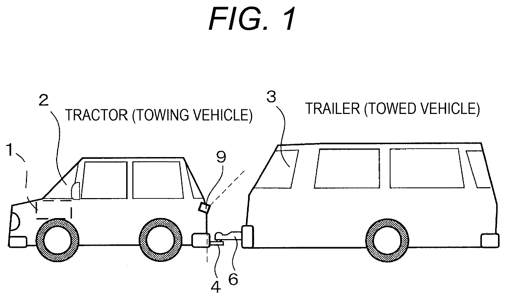

Hereinafter, a parking assistance device according to an embodiment disclosed here will be described in detail with reference to the drawings. First, a towing vehicle (tractor) 2 equipped with a parking assistance device 1 according to the present embodiment and a towed vehicle (hereinafter referred to as trailer) 3 to be towed by the towing vehicle 2 will be described below. Fig. 1 is a diagram illustrating the towing vehicle 2 and the trailer 3.

Here, the towing vehicle 2 is also called a tractor, and is able to travel while towing the trailer 3. The towing vehicle 2 may be, for example, an automobile (an internal combustion engine automobile) using an internal combustion engine (an engine, or the like) as a drive source, an automobile (an electric automobile, a fuel cell automobile, or the like) using an electric motor (a motor or the like) as a drive source, or an automobile (a hybrid automobile) using both of the internal combustion engine and the electric motor as a drive source. The vehicle type is not limited, and the towing vehicle 2 may be a standard vehicle or a large commercial tractor (trailer head) as long as the towing vehicle 2 is equipped with a towing device 4 to be described later.

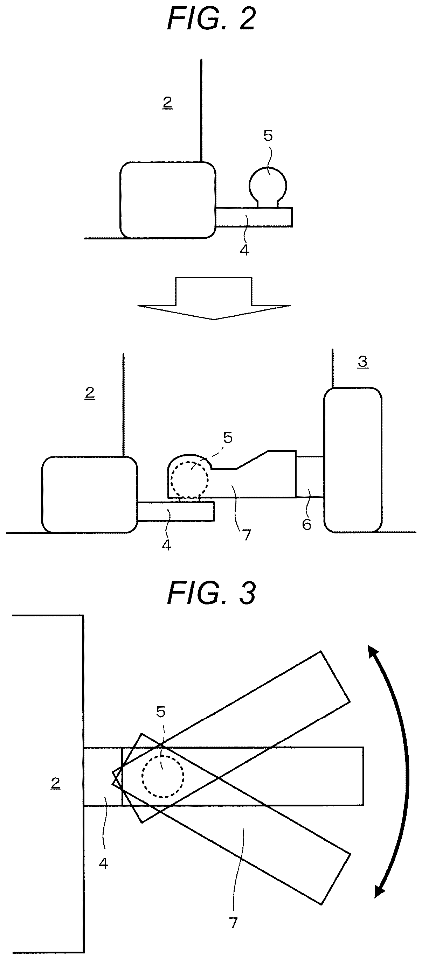

As illustrated in Fig. 1, the towing device 4 (hitch) for towing the trailer 3 is disposed to protrude from a lower portion of, for example, a central portion of a rear bumper of the towing vehicle 2 in a vehicle width direction. Fig. 2 is an enlarged view of the vicinity of the towing device 4.

As illustrated in Fig. 2, the towing device 4 is fixed to, for example, a frame of the towing vehicle 2. As an example, the towing device 4 includes a hitch ball 5 having a spherical tip end portion erected in a vertical direction (vehicle up-down direction), a coupler 7 provided at a tip end portion of a connection member 6 fixed to the trailer 3 covers the hitch ball 5, thereby connecting the hitch ball 5 and the coupler 7. As a result, the towing vehicle 2 and the trailer 3 are connected to each other. However, the shapes of the hitch ball 5 and the coupler 7 is not limited to the shapes illustrated in Fig. 2, and may be any shape as long as the towing vehicle 2 and the trailer 3 can be connected to each other.

Then, when the hitch ball 5 and the coupler 7 are connected to each other, the hitch ball 5 transmits front-rear and left-right movement to the trailer 3 (the connection member 6) side according to the movement of the towing vehicle 2. As illustrated in Fig. 3, even when the coupler 7 is connected to the hitch ball 5, an angle of the coupler 7 with respect to the hitch ball 5 can be freely changed (with an upper limit), and the trailer 3 can swing (turn) in the vehicle width direction with respect to the towing vehicle 2.

On the other hand, as illustrated in Fig. 1, a rear camera (imaging device) 9 is provided on a wall portion of a rear hatch on the rear side of the towing vehicle 2. The rear camera 9 is, for example, a digital camera incorporating an imaging element such as a CCD or a CIS. The rear camera 9 can output video data (captured image data) at a predetermined frame rate. The rear camera 9 includes a wide-angle lens or a fisheye lens, an optical axis direction is set obliquely downward, and a range of, for example, 140° to 220° can be imaged in a horizontal direction.

The imaging range of the rear camera 9 includes at least the towing device 4 and the hitch ball 5 at a rear end portion of the towing vehicle 2. The image data captured by the rear camera 9 can be used to detect, for example, a connection state (for example, a connection angle (hitch angle), presence or absence of connection, or the like) between the towing vehicle 2 and the trailer 3. However, as a unit that detects the connection state between the towing vehicle 2 and the trailer 3, a sensor provided on the towing device 4 may be provided instead of the rear camera 9.

On the other hand, the trailer 3 is also called a towed vehicle, and travels while being towed by the above-described towing vehicle 2. Accordingly, unlike the towing vehicle 2, basically, there is no engine or motor as a drive source. A steering device (steering system) for changing a direction of wheels is not provided. For example, a camping trailer having a living space inside, and a light trailer carrying a car or a ship are applicable. The trailer 3 includes a main body portion, a plurality of (two in the present embodiment) trailer wheels, the connection member 6, and the coupler 7.

Here, as illustrated in Fig. 1, the connection member 6 is provided at a lower portion of a central portion of the main body portion of the trailer 3 in the vehicle width direction, and is disposed to protrude forward (in a traveling direction) from a front end portion of the main body portion.

As illustrated in Fig. 2, the coupler 7 is provided at a front end portion of the connection member 6, and is formed with a spherical recessed portion that covers the hitch ball 5. When the coupler 7 covers the hitch ball 5, the trailer 3 is connected to the towing vehicle 2 in a turnable manner as described above (see Fig. 3). A length and a height from a ground surface of the connection member 6 (that is, a position of the coupler 7 in the trailer 3) vary depending on the type of the trailer 3. In the present embodiment, the coupler 7 is located at least at a position at which the coupler 7 can be connected to the hitch ball 5 provided in the towing vehicle 2.

### Description of Parking Assistance Device

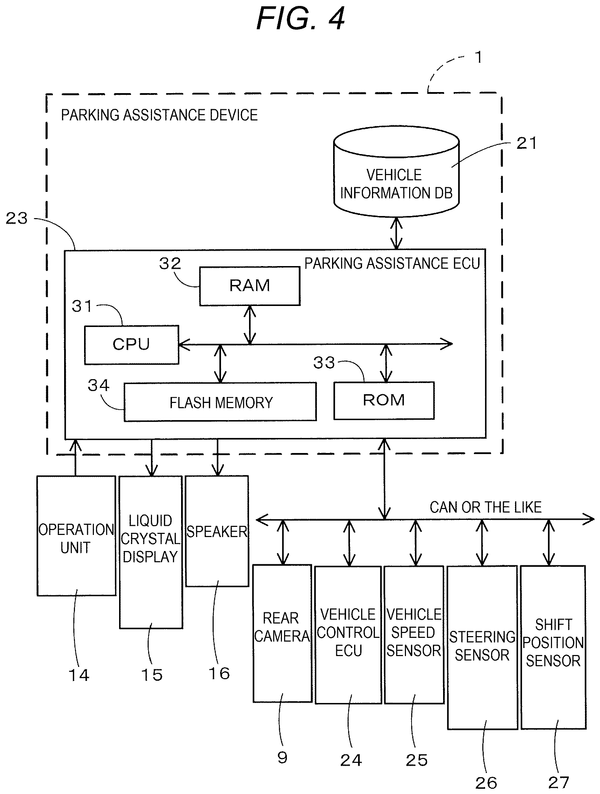

Subsequently, the parking assistance device 1 provided on the towing vehicle 2 will be described. The parking assistance device 1 is a device for assisting a vehicle operation performed by a driver when parking the towing vehicle 2 connected with the trailer 3 into a specified parking space. Fig. 4 is a block diagram illustrating a configuration of the parking assistance device 1 according to the present embodiment.

As illustrated in Fig. 4, the parking assistance device 1 according to the present embodiment includes vehicle information DB 21 in which various types of data related to the towing vehicle 2 and the trailer 3 are recorded, and a parking assistance ECU 23 that performs various types of calculation processing based on input information. The parking assistance device 1 is connected, via an in-vehicle network such as a CAN, to an operation unit 14 that receives an operation from an occupant of the towing vehicle 2, a liquid crystal display 15 that displays a travel trajectory for parking into a parking space and other pieces of information related to parking assistance to the occupant of the towing vehicle 2, and a speaker 16 that outputs voice guidance related to parking assistance. The parking assistance device 1 is also connected to the rear camera 9 installed on the towing vehicle 2, a vehicle control ECU 24 that performs various types of control on the towing vehicle 2, and various sensors such as a vehicle speed sensor 25, a steering sensor 26, and a shift position sensor 27.

The operation unit 14 is provided on an instrument panel or a steering wheel of the towing vehicle 2, and includes a plurality of operation switches (not illustrated) such as various keys and buttons, which are operated, for example, when a transition operation to a parking assistance mode to be described later is performed or when various parameters related to the towing vehicle 2 or the trailer 3 are input. The parking assistance ECU 23 performs control to execute various corresponding operations based on a switch signal output by pressing each switch or the like. The operation unit 14 may include a touch panel provided on a front surface of the liquid crystal display 15. A microphone and a voice recognition device may be further provided.

The liquid crystal display 15 is provided on the instrument panel of the towing vehicle 2, and displays an overhead image of a vehicle periphery, an image captured by the rear camera 9, a travel trajectory for parking and the like when transitioning to the parking assistance mode that assists in parking with the towing vehicle 2 connected with the trailer 3. When a parking operation is to be performed by a user rather than automatically, an operation instruction of steering for traveling along a travel trajectory, or an operation instruction of a brake, an accelerator, or a shift position is also displayed. The parking assistance device 1 of the present embodiment is based on a premise that at least the brake, the accelerator, and the shift position are manually operated, and provides, using the liquid crystal display 15, guidance on a position at which a turning operation of turning the traveling direction from forward to backward is recommended to be performed. The liquid crystal display 15 may also be used in a navigation device.

The speaker 16 outputs, based on an instruction from the parking assistance ECU 23, voice guidance or the like for guiding a parking operation when transitioning to the parking assistance mode. The guidance on a position at which a turning operation of turning the traveling direction from forward to backward is recommended to be performed is also provided using the speaker 16. The speaker 16 may also be used in a navigation device.

The vehicle information DB 21 is a storage unit in which various types of information on the towing vehicle 2 and the trailer 3 are stored. For example, with respect to the towing vehicle 2, an installation position of the hitch ball 5 (a height from the ground surface, a position in a left-right direction, a distance from a vehicle rear end), a total length, a vehicle width, a wheel base, a minimum turning radius, and the like are stored. A distance from a rear wheel shaft of the towing vehicle 2 to a connection point between the towing vehicle 2 and the trailer 3 (the position of the hitch ball 5) is also stored. On the other hand, with respect to the trailer 3, an installation position of the coupler 7 (a height from the ground surface, a position in the left-right direction, a distance from a vehicle tip end), a total length, a vehicle width, a minimum turning radius, and the like are stored. A distance (corresponding to a trailer wheelbase) from a reference point of the trailer 3 to the connection point between the towing vehicle 2 and the trailer 3 (the position of the hitch ball 5) is also stored. The reference point of the trailer 3 is also a rotation center of the trailer 3, and when the trailer 3 includes one axis (two wheels), an axial center is the reference point. On the other hand, when the trailer 3 includes two or more axes (four or more wheels), the reference point is present between a foremost axis and a rearmost axis (a position thereof varies depending on load distribution). A size of a trailer wheelbase is one of parameters representing a size of the trailer 3. The pieces of information may be input in advance by the occupant or a person from the vehicle manufacturer using the operation unit 14, or values detected by the rear camera 9 or various sensors may be automatically input. The trailer 3 to be towed is not necessarily fixed, and thus when the trailer 3 to be towed changes, the above parameters must also change. As a storage medium of the vehicle information DB 21, for example, a memory card can be used. Further, the vehicle information DB 21 may be provided in a storage area (for example, RAM or flash memory) in the parking assistance ECU 23.

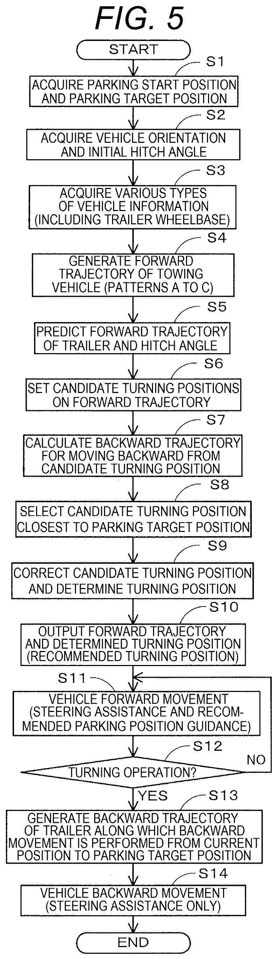

On the other hand, the parking assistance electronic control unit (ECU) 23 is an electronic control unit that performs overall control of the parking assistance device 1, and includes a CPU 31 serving as a calculation device and a control device, and internal storage devices such as a RAM 32 that is used as a working memory when the CPU 31 performs various types of calculation processing and stores data on a trajectory when the travel trajectory is calculated, and the like, a ROM 33 in which a parking assistance processing program (see Fig. 5), which will be described later, and the like are recorded in addition to control programs, and a flash memory 34 that stores a program read from the ROM 33. The parking assistance ECU 23 executes various functions as processing algorithms. Examples of the functions include a function of acquiring a parking start position and a parking target position, a function of generating a travel trajectory for parking from the parking start position to the parking target position, and a function of setting, on a forward trajectory, a recommended turning position at which a turning operation is recommended to be performed.

The vehicle control ECU 24 is an electronic control unit that controls the towing vehicle 2. The vehicle control ECU 24 is connected to each drive unit of the vehicle such as a steering, a brake, an accelerator, and a transmission, and in the present embodiment, for example, when transitioning to the parking assistance mode that assists in parking into a parking space to be described later, automatic driving assistance for the towing vehicle 2 can be executed by controlling each drive unit. Specifically, the parking assistance ECU 23 transmits various types of assistance information on the automatic driving assistance generated by the parking assistance device 1 to the vehicle control ECU 24 via the CAN when the parking assistance mode is executed. The vehicle control ECU 24 uses the received various types of assistance information to execute the automatic driving assistance after the start of traveling. The assistance information includes, for example, information indicating a travel trajectory recommended for traveling of the towing vehicle 2 and the trailer 3, and information indicating a vehicle speed or a steering angle when traveling along the travel trajectory. In the automatic driving assistance of the present embodiment, basically, only the steering operation is automatically performed, and the accelerator, the brake, and the transmission are manually controlled. On the other hand, it is not essential that the towing vehicle 2 is equipped with the above-described automatic driving assistance, and the towing vehicle 2 may be a vehicle that can only be driven manually, including the steering operation. In this case, when transitioning to the parking assistance mode, instead of the above-described automatic driving assistance, steering operation guidance, and brake, accelerator, and shift position operation guidance are provided for traveling along the recommended travel trajectory.

The vehicle speed sensor 25 is an active wheel speed sensor attached to a wheel of the towing vehicle 2, detects a rotation speed of the wheel, and outputs a speed signal. The steering sensor 26 is attached inside a steering device, detects a steering angle when a steering wheel is turned, and outputs a steering angle signal. Further, the shift position sensor 27 is built into a shift lever, and detects which of "P (parking)", "N (neutral)", "R (reverse)", "D (drive)", "2 (second gear)", and "L (low)" the shift position is.

The parking assistance ECU 23 can acquire a current vehicle speed of the towing vehicle 2, a traveling distance, a steering angle, a shift position, and the like based on the output signals from the various sensors.

### Description of Parking Assistance Processing Program

Subsequently, the parking assistance processing program executed by the parking assistance ECU 23 in the parking assistance device 1 having the above-described configuration will be described with reference to Fig. 5. Fig. 5 is a flowchart of the parking assistance processing program according to the present embodiment. Here, the parking assistance processing program is a program that is executed when the driver of the towing vehicle 2 operates the operation unit 14 to select transition to the parking assistance mode while an accessory power supply (ACC power supply) of the towing vehicle 2 is turned on, and is a program for assisting a parking operation performed by the driver when parking with the towing vehicle 2 connected with the trailer 3. The program illustrated in the flowchart in Fig. 5 is stored in the RAM 32 or the ROM 33 of the parking assistance ECU 23 and is executed by the CPU 31.

First, in step (hereinafter abbreviated as S) 1, the CPU 31 acquires a parking start position and a parking target position. Basically, a current position of the towing vehicle 2 and the trailer 3 is the parking start position, but when it is difficult to park from the current position to the parking target position, the parking start position may be set to a position different from the current position, and guidance to the parking start position may also be provided. On the other hand, regarding the parking target position, for example, the user may designate a desired parking position from an image around the towing vehicle 2 displayed on the liquid crystal display 15, and the designated position may be set as the parking target position, or a camera or a sensor may be used to detect a parking space around the towing vehicle 2, and the detected parking space may be set as the parking target position. In the following description, it is assumed that there are no obstacles around the vehicle that may impede the traveling of the vehicle.

Next, in S2, the CPU 31 acquires an orientation of the towing vehicle 2 and the trailer 3 and a connection angle (hitch angle) between the towing vehicle 2 and the trailer 3 at the parking start position. The connection angle at the parking start position (that is, a time point when the parking assistance is started) acquired in S2 is particularly referred to as an "initial hitch angle". As described above, since the current position of the towing vehicle 2 and the trailer 3 is basically the parking start position, the current orientation and connection angle of the towing vehicle 2 and the trailer 3 are acquired in S2. The initial hitch angle can be specified from, for example, an image captured by the rear camera 9.

Subsequently, in S3, the CPU 31 acquires information on the towing vehicle 2 and the trailer 3 from the vehicle information DB 21. In the vehicle information DB 21, various types of information on the towing vehicle 2 and the trailer 3 are stored, and particularly, for the trailer 3, at least a "distance from a reference point of the trailer 3 to a connection point (position of the hitch ball 5) between the towing vehicle 2 and the trailer 3 (hereinafter, referred to as a trailer wheelbase)" is acquired. In addition, for example, in S3, for the towing vehicle 2, a "distance from a rear wheel shaft of the towing vehicle 2 to the connection point (position of the hitch ball 5) between the towing vehicle 2 and the trailer 3 (hereinafter, referred to as a connection distance)", the "minimum turning radius (corresponding to a maximum curvature of a travel trajectory) of the towing vehicle 2", and the like are acquired. The processing order of S2 and S3 may be reversed.

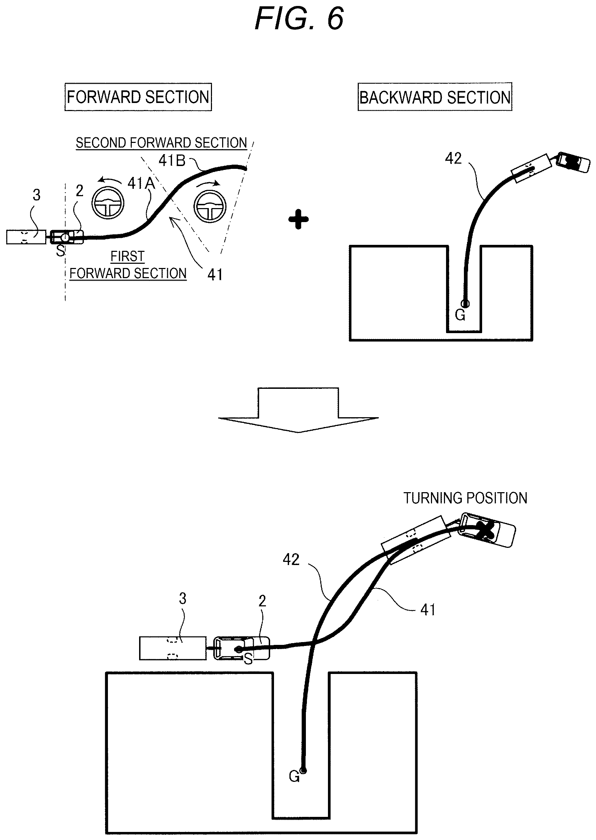

Subsequently, in S4, the CPU 31 generates a forward trajectory along which the towing vehicle 2 moves forward from the parking start position. Here, particularly, a travel trajectory when backward parking into a parking target position as a parking target such as a parking space includes a forward section in which forward movement is performed from a parking start position S while turning in a predetermined manner, and a backward section in which backward movement is performed to a parking target position G after a turning operation of turning a traveling direction from forward to backward is performed by an occupant, as illustrated in Fig. 6. Hereinafter, the travel trajectory in the forward section is referred to as a forward trajectory 41, and the travel trajectory in the backward section is referred to as a backward trajectory 42. Then, in the parking assistance device 1 of the present embodiment, regarding the travel trajectory when backward parking, a travel trajectory of the towing vehicle 2 is generated for the forward trajectory 41, and a travel trajectory of the trailer 3 is generated for the backward trajectory 42. However, it is not necessary to necessarily generate only the travel trajectory of the towing vehicle 2 for the forward trajectory 41 and generate only the travel trajectory of the trailer 3 for the backward trajectory 42, the travel trajectories of both the towing vehicle 2 and the trailer 3 may be generated for the forward trajectory 41 and the backward trajectory 42.

Then, in S4, the CPU 31 first generates only the forward trajectory 41 of the travel trajectory from the parking start position to the parking target position. On the other hand, the backward trajectory 42 is generated at a time point when the turning operation is performed as described later (S13).

The forward section further includes a first forward section in which the forward movement is performed from the parking start position acquired in S1 with a first direction away from the parking target position (when viewed from the towing vehicle 2, left turn when the right hand is the parking target position and right turn when the left hand is the parking target position) as a turning direction, and a second forward section in which the forward movement is performed with a second direction opposite to the first direction as a turning direction after the first forward section. Hereinafter, the forward trajectory 41 in the first forward section is referred to as a first forward trajectory 41A, and the forward trajectory 41 in the second forward section is referred to as a second forward trajectory 41B. The first forward section is a section in which traveling away from the parking target position is intentionally performed in order to start the backward movement at a position separated from the parking target position (to secure a turning radius during the backward movement), and the second forward section is a section in which traveling for adjusting a hitch angle is performed. A section in which straight traveling is performed may be further included before the first forward section or between the first forward section and the second forward section.

Hereinafter, the generation processing of the forward trajectory 41 of the towing vehicle 2 in S4 will be described in detail. Although various patterns are conceivable as a method for generating the forward trajectory 41, three patterns A to C will be described below as examples. All of the patterns A to C have in common the fact that when the towing vehicle 2 travels along the forward trajectory 41, the forward trajectory 41 is generated such that the hitch angle does not exceed a limit angle at which the backward movement is performable as long as traveling is performed along the forward trajectory, and in order to obtain such a forward trajectory 41, a curvature finally maintained for the second forward trajectory 41B is intentionally set to be smaller than a maximum curvature. The maximum curvature is a maximum curvature of the towing vehicle 2, and is determined by the minimum turning radius of the towing vehicle 2.

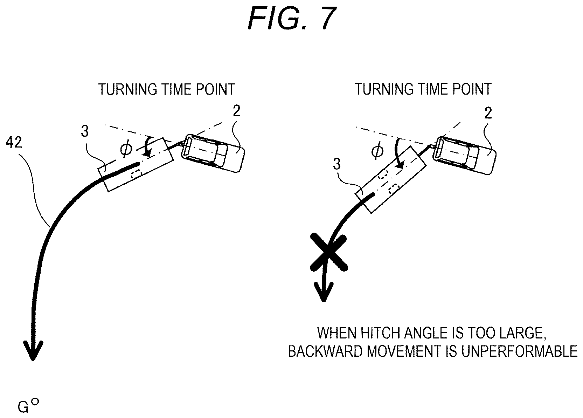

Here, to describe the "limit angle", as described above, the second forward section is a section in which the traveling for adjusting the hitch angle is performed, and as illustrated in Fig. 7, traveling is performed to adjust a hitch angle φ such that the trailer 3 faces a direction of the parking target position G at a time point of making a turn. However, it's not that the hitch angle φ can be within any angle range as long as the trailer 3 is facing the direction of the parking target position G, and in order to move backward, the hitch angle φ is required to be within a predetermined range (backward movable hitch angle range). That is, since the trailer 3 does not have a steering device, a curvature of the backward trajectory 42 of the trailer 3 when moving backward is determined mainly based on the hitch angle φ which is the connection angle between the towing vehicle 2 and the trailer 3, but when the hitch angle φ at the time of making a turn is too large, the towing vehicle 2 is not be able to move backward even when it tries to do so. The limit angle indicates an upper limit angle of the hitch angle φ at which the backward movement is performable, and differs depending on the standard of the vehicle. For example, when the limit angle is Z degrees and the hitch angle φ is 0 degrees to -Z degrees at the turning position (the negative hitch angle indicates an angle at which the trailer 3 is in a parking target position direction (counterclockwise direction in Fig. 7), the backward movement can be started, and the trailer 3 can be finally guided to the parking target position G. When the second forward trajectory 41B is such that the maximum curvature is finally maintained, the towing vehicle 2 can transition to a steady state, which will be described later, but in the process, the hitch angle exceeds the limit angle.

### Pattern A

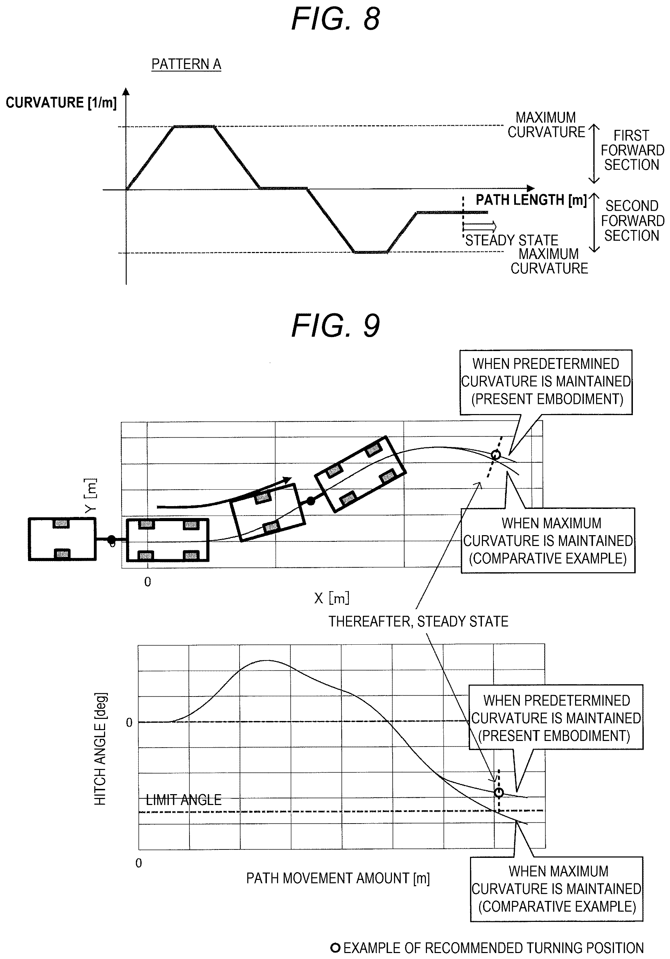

First, to describe the pattern A, as illustrated in Fig. 8, the forward trajectory 41 generated by the pattern A is a trajectory in which the curvature is gradually ("gradually" means changing the curvature while moving forward, the same applies below) increased in the first direction until the maximum curvature is reached, then the maximum curvature is maintained for a predetermined period (first period), thereafter the curvature is gradually decreased until the curvature 0 is reached (i.e., a neutral position), then a state of the curvature 0 is maintained for a predetermined period (second period), thereafter the curvature is gradually increased in the second direction until the maximum curvature is reached, then the maximum curvature is maintained for a predetermined period (third period), thereafter the curvature is gradually decreased to a predetermined curvature smaller than the maximum curvature, and the predetermined curvature is maintained. The first forward section is until the curvature becomes 0, and the second forward section is after the curvature becomes a negative value from 0. A positive value of the curvature indicates a turn in the first direction, and a negative value of the curvature indicates a turn in the second direction, with an absolute value indicating a magnitude of the curvature.

Lengths of the first period to the third period can be changed as appropriate, and can be set by, for example, a trailer wheelbase of the trailer 3 or the initial hitch angle. The travel trajectory may not include the second period in which the state of curvature 0 is maintained. The forward trajectory 41 generated by the pattern A basically has the same shape regardless of a positional relationship between the parking start position and the parking target position that are acquired in S1. When the parking start position and the parking target position are away from each other or too close to each other, for example, an additional trajectory such as traveling straight or moving backward at the beginning is inserted as necessary.

Particularly, the forward trajectory 41 generated by the pattern A is such that the hitch angle does not exceed the limit angle by finally decreasing the curvature to the predetermined curvature smaller than the maximum curvature and maintaining the predetermined curvature in the second forward section. The predetermined curvature that is finally maintained in the forward trajectory 41 is a towable backward curvature. Here, the towable backward curvature is a curvature obtained by subtracting a curvature margin from the maximum curvature, and is, for example, a curvature that does not exceed the maximum curvature even when an incremental steering operation is performed. A change rate of the curvature of the second forward trajectory 41B also changes depending on a trailer size such as a trailer wheelbase.

As a result, the generated forward trajectory 41 is as illustrated in Fig. 9. Fig. 9 is a diagram illustrating an example of the forward trajectory 41 generated by the pattern A from above, and also illustrates a transition of the hitch angle with respect to a movement distance. As a comparative example, an example of a forward trajectory in a case where the maximum curvature is maintained as it is without being decreased to the predetermined curvature in the second forward section is also illustrated.

As illustrated in Fig. 9, the forward trajectory 41 generated by the pattern A is such that the hitch angle does not exceed the limit angle at which the backward movement is performable as long as traveling is performed along the forward trajectory 41. As a result, as described later, the recommended turning position is set for the forward trajectory 41 (S9), and even when an occupant operation is delayed and a turn is made beyond the recommended turning position, the hitch angle does not exceed the limit angle at the turning position. As a result, the parking assistance can be continuously performed until the parking is completed without being interrupted halfway. In Figs. 8 and 9, an initial orientation and the initial hitch angle of the towing vehicle 2 are assumed to be 0 degrees (90 degrees perpendicular to the target parking space).

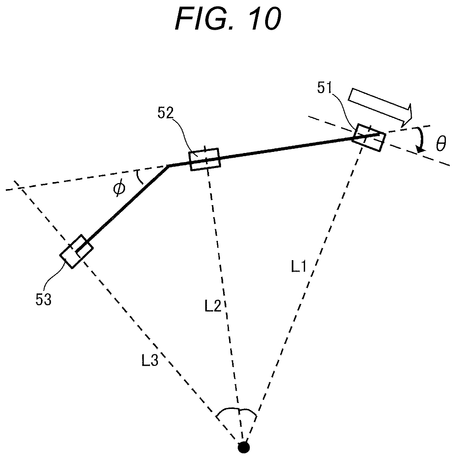

To describe in more detail below, the forward trajectory 41 generated by the pattern A is such that the towing vehicle 2 transitions to the "steady state" from a certain timing (hereinafter, referred to as a transition timing) before the hitch angle φ exceeds the limit angle in the second forward trajectory 41B, and thereafter maintains the steady state. The steady state is a state in which a turning center of the towing vehicle 2 and a turning center of the trailer 3 coincide with each other. More specifically, the steady state is a state in which the hitch angle φ and a steering angle θ of the towing vehicle 2 have a specific relationship in order to implement traveling while the hitch angle φ is fixed and a relative positional relationship between the towing vehicle 2 and the trailer 3 is maintained, and in the steady state, the hitch angle φ remains fixed unless the steering angle θ of the towing vehicle 2 is changed during the forward movement. Accordingly, as illustrated in Fig. 8, in the case where the forward trajectory 41 of the pattern A is such that the towing vehicle 2 transitions to the steady state with a fixed curvature (the fixed curvature means that the steering angle θ is also fixed), when the limit angle is not exceeded at the time of transition to the steady state, the steady state is continued from then on, and no matter how far the towing vehicle 2 travels along the forward trajectory 41, the hitch angle φ does not exceed the limit angle. Fig. 10 is a diagram schematically illustrating a relationship between the towing vehicle 2 and the trailer 3 in the steady state. As illustrated in Fig. 10, the steady state is indicated when the turning center of the towing vehicle 2 (an intersection of a line L1 and a line L2 in Fig. 10 is the turning center of the towing vehicle 2) and the turning center of the trailer 3 (an intersection of a line L2 and a line L3 in Fig. 10 is the turning center of the trailer 3) coincide with each other. Accordingly, the steady state is a state in which when the steering angle θ is fixed after the state illustrated in Fig. 10 is reached, the hitch angle φ remains fixed thereafter while moving forward. On the other hand, in the case where the forward trajectory of the comparative example is such that the maximum curvature is finally maintained, the towing vehicle 2 transitions to the steady state, but the hitch angle exceeds the limit angle in the process, so that in the steady state, the hitch angle is fixed at a value that exceeds the limit angle.

When the traveling direction is switched from forward to backward in the steady state, there is an advantage that it is not necessary to perform a stationary steering operation for setting the steady state before the backward movement is started. Accordingly, in the present embodiment, the recommended turning position is set after the transition to the steady state. In the example illustrated in Fig. 8, the recommended turning position is set at the transition timing to transition to the steady state, but as long as the recommended turning position is set at any timing after the transition to the steady state, the stationary steering operation is basically unnecessary. However, the idea that no stationary steering operation is required is theoretical, and in reality, there may be cases where the stationary steering operation is required, albeit only to a small extent.

### Pattern B

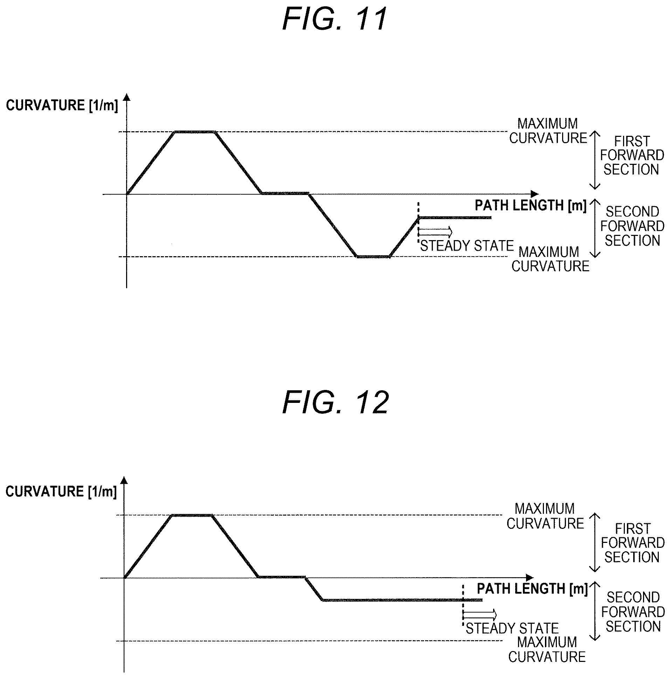

Next, to explain the pattern B, as illustrated in Fig. 11, the forward trajectory 41 generated by the pattern B is a trajectory in which the curvature is gradually increased in the first direction until the maximum curvature is reached, then the maximum curvature is maintained for a predetermined period (first period), thereafter the curvature is gradually decreased until the curvature 0 is reached (i.e., a neutral position), then a state of the curvature 0 is maintained for a predetermined period (second period), thereafter the curvature is gradually increased in the second direction until the maximum curvature is reached, then the maximum curvature is maintained for a predetermined period (third period), thereafter the curvature is gradually decreased to a predetermined curvature smaller than the maximum curvature, and the predetermined curvature is maintained. The first forward section is until the curvature becomes 0, and the second forward section is after the curvature becomes a negative value from 0. A positive value of the curvature indicates a turn in the first direction, and a negative value of the curvature indicates a turn in the second direction, with an absolute value indicating the magnitude of the curvature.

Lengths of the first period to the third period can be changed as appropriate, and can be set by, for example, a trailer wheelbase of the trailer 3 or the initial hitch angle. The travel trajectory may not include the second period in which the state of curvature 0 is maintained. The forward trajectory 41 generated by the pattern B basically has the same shape regardless of a positional relationship between the parking start position and the parking target position that are acquired in S1. When the parking start position and the parking target position are away from each other or too close to each other, for example, an additional trajectory such as traveling straight or moving backward at the beginning is inserted as necessary.

Here, the forward trajectory 41 generated by the pattern B basically has a shape same as that of the forward trajectory 41 generated by the pattern A, and is such that the hitch angle does not exceed the limit angle by decreasing the curvature to the predetermined curvature smaller than the maximum curvature and finally maintaining the predetermined curvature in the second forward section, similar to that by the pattern A. However, in the pattern B, the forward trajectory 41 is generated under a condition that a timing at which the curvature is decreased from the maximum curvature in the second forward trajectory 41B to reach the predetermined curvature (towable backward curvature) is the same as a timing of transition to the steady state. That is, it can be said that the forward trajectory 41 generated by the pattern B is such that the towing vehicle 2 can transition to the steady state earliest among the forward trajectory 41 generated by the pattern A. Therefore, in the pattern B, particularly, a timing of transition from the maximum curvature to the predetermined curvature (a length of the third period) is optimized.

Then, in the forward trajectory 41 generated by the pattern B, when the recommended turning position is set at the transition timing to transition to the steady state, the recommended turning position can be set at a timing when a clothoid portion ends and the predetermined curvature is reached, and the forward trajectory 41 can be shortened as much as possible. As a result, the surrounding space required for parking can be reduced.

### Pattern C

Finally, to describe the pattern C, as illustrated in Fig. 12, the forward trajectory 41 generated by the pattern C is a trajectory in which the curvature is gradually increased in the first direction until the maximum curvature is reached, then the maximum curvature is maintained for a predetermined period (first period), thereafter the curvature is gradually decreased until the curvature 0 is reached (i.e., a neutral position), then a state of the curvature 0 is maintained for a predetermined period (second period), thereafter the curvature is gradually increased in the second direction until a predetermined curvature smaller than the maximum curvature is reached, and the predetermined curvature is maintained. The first forward section is until the curvature becomes 0, and the second forward section is after the curvature becomes a negative value from 0. A positive value of the curvature indicates a turn in the first direction, and a negative value of the curvature indicates a turn in the second direction, with an absolute value indicating the magnitude of the curvature.

Lengths of the first period and the third period can be changed as appropriate, and can be set by, for example, a trailer wheelbase of the trailer 3 or the initial hitch angle. The travel trajectory may not include the second period in which the state of curvature 0 is maintained. The forward trajectory 41 generated by the pattern C basically has the same shape regardless of a positional relationship between the parking start position and the parking target position that are acquired in S1. When the parking start position and the parking target position are away from each other or too close to each other, for example, an additional trajectory such as traveling straight or moving backward at the beginning is inserted as necessary.

Particularly, the forward trajectory 41 generated by pattern C is the forward trajectory 41 such that the hitch angle does not exceed the limit angle by intentionally maintaining the predetermined curvature smaller than the maximum curvature at a time point when the curvature reaches the predetermined curvature without increasing the curvature to the maximum curvature in the second forward section. The predetermined curvature that is finally maintained in the forward trajectory 41 is the towable backward curvature. Here, the towable backward curvature is a curvature obtained by subtracting a curvature margin from the maximum curvature, and is, for example, a curvature that does not exceed the maximum curvature even when an incremental steering operation is performed. A change rate of the curvature of the second forward trajectory 41B also changes depending on a trailer size such as a trailer wheelbase.

As a result, the forward trajectory 41 generated by the pattern C is such that the hitch angle does not exceed the limit angle at which the backward movement is performable as long as traveling is performed along the forward trajectory 41, similar to the pattern A illustrated in Fig. 9. As described later, the recommended turning position is set for the forward trajectory 41, but even when an occupant operation is delayed and a turn is made beyond the recommended turning position, the hitch angle does not exceed the limit angle at the turning position. As a result, the parking assistance can be continuously performed until the parking is completed without being interrupted halfway.

The forward trajectory 41 generated by the pattern C is such that the towing vehicle 2 transitions to the "steady state" from a transition timing before the hitch angle φ exceeds the limit angle in the second forward trajectory 41B, and thereafter maintains the steady state, similar to that by the pattern A. However, in the pattern C, it takes longer to adjust the hitch angle compared to the pattern A since the maximum curvature is not reached, and a distance until the transition to the steady state is longer. On the other hand, an amount of steering control in the second forward section can be reduced. In other words, the towing vehicle 2 can transition to the steady state in which the hitch angle does not exceed the limit angle with simpler control.

The forward trajectory 41 can be generated using any of the above patterns A to C, but the pattern to generate the forward trajectory 41 may be selected by the occupant or automatically by the system. For example, when the selection is made by the occupant, the selection is made based on the occupant operation received at the operation unit 14 while a setting screen related to the parking assistance is displayed on the liquid crystal display 15. On the other hand, when the selection is made by the system, since a space required to make a parking trajectory differs depending on the pattern as described above, a camera or sensor installed in the vehicle can be used to detect the space around the vehicle (the space around the towing vehicle 2 and the trailer 3 in which the towing vehicle 2 and the trailer 3 can travel) at a time point when the parking assistance is started, and a pattern can be selected to suit that space. For example, as described above, in the pattern B, the space required to make the parking trajectory can be narrowed. On the other hand, in the pattern C, the control can be simplified, but a wider space is required. Therefore, it is desirable to select the pattern C when there is a sufficient space around the vehicle and select the pattern B when there is no sufficient space.

As illustrated in Fig. 9, the forward trajectory 41 of the towing vehicle 2 that is generated in S4 is a trajectory that moves diagonally forward and is made up of a plurality of connected clothoid curves, arc curves, and straight lines (there may be no straight lines). For example, taking the forward trajectory 41 of the pattern A as an example, the forward trajectory is a combination of a first clothoid curve obtained by advancing from the parking start position S while gradually turning the steering wheel in a left direction (i.e., while gradually increasing the curvature), a first arc curve obtained by advancing thereafter while maintaining the maximum curvature, a second clothoid curve obtained by advancing while gradually returning the steering wheel in a straight direction (that is, while gradually decreasing the curvature), a first straight line advancing straight after the steering wheel is in a neutral position, a third clothoid curve obtained by advancing while gradually turning in a right direction from the neutral position, a second arc curve obtained by advancing thereafter while maintaining the maximum curvature, a fourth clothoid curve obtained by advancing while gradually returning the steering wheel from the maximum curvature in the straight direction (that is, while gradually decreasing the curvature), and a third arc curve obtained by advancing while maintaining a predetermined curvature after reaching the predetermined curvature. The forward trajectory 41 may include a spline curve in addition to an arc, a straight line, and a clothoid curve.

Thereafter, in S5, the CPU 31 predicts the travel trajectory of the trailer 3 and the transition of the hitch angle when the towing vehicle 2 moves along the forward trajectory 41 generated in S4, and acquires the predicted travel trajectory and the transition of the hitch angle as a forward trajectory 43 of the trailer 3 and the transition of the hitch angle during traveling along the forward trajectory. The prediction of the travel trajectory of the trailer 3 and the transition of the hitch angle is made based on various types of information stored in the vehicle information DB 21 (for example, a distance from the rear wheel shaft of the towing vehicle 2 to the connection point between the towing vehicle 2 and the trailer 3 (the position of the hitch ball 5), and a trailer wheelbase) and the orientation and the initial hitch angle of the trailer 3 that are obtained in S2.

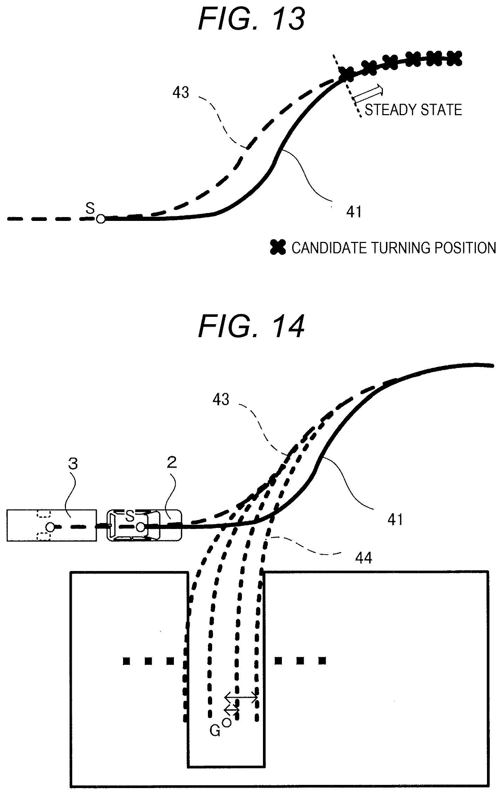

Next, in S6, the CPU 31 sets a candidate turning position on the forward trajectory 41 of the towing vehicle 2 generated in S4 and the forward trajectory 43 of the trailer 3 estimated in S5, which is a candidate position at which the towing vehicle 2 and the trailer 3 makes a turn (switch from forward to backward). A plurality of candidate turning positions are set up to an end point of the forward trajectory at a predetermined distance interval (for example, an interval of 1 m or an interval of 50 cm) as illustrated in Fig. 13 in a range after the towing vehicle 2 transitions to the steady state of the forward trajectory 41. The interval and the number of the set candidate turning positions can be changed as appropriate. The candidate turning positions may be set within a range from the start point to the end point of the forward trajectory. However, even in this case, it is desirable to set the recommended turning position at a position after the transition to the steady state. As a result, the forward trajectory 41 can be generated such that the towing vehicle 2 transitions to the steady state at least by the time the towing vehicle 2 reaches the recommended turning position.

Subsequently, in S7, the CPU 31 calculates, for each of the candidate turning positions set in S6, a backward trajectory of the trailer 3 when it is assumed that the backward movement is started from the candidate turning position. An initial curvature of the trajectory of the trailer 3 at a backward movement start time point is determined by the hitch angle at a turning time point. Thereafter, how the curvature changes depends on the vehicle information of the trailer 3 such as a trailer wheelbase. Accordingly, in the calculation of the backward trajectory in S7, the hitch angle at the candidate turning position is acquired particularly using the estimation result in S5, and the backward trajectory is calculated using the acquired hitch angle and the vehicle information of the trailer 3. The backward trajectory generated in S7 is an ideal backward trajectory in the case of backward turning at the candidate turning position and is different from an actual backward trajectory.

Thereafter, in S8, the CPU 31 compares the backward trajectory calculated in S7 for each of the candidate turning positions, and selects, from the plurality of candidate turning positions, the candidate turning position at which an end point of the backward trajectory is closest to the parking target position. For example, Fig. 14 illustrates an example of a comparison of a backward trajectory 44 of the trailer 3. In the example illustrated in Fig. 14, an end point of the second backward trajectory 44 from the right is closest to the parking target position G, and thus the candidate turning position corresponding to that backward trajectory 44 is selected.

Next, in S9, the CPU 31 corrects the candidate turning position selected in S8 in a direction in which the end point of the backward trajectory approaches the parking target position, and finally determines the corrected candidate turning position as the recommended turning position (hereinafter referred to as the recommended turning position). For example, in the case of comparing the backward trajectory 44 of the trailer 3 as illustrated in Fig. 14, when the end point of the backward trajectory 44 of the candidate turning position selected in S8 is shifted to the right with respect to the parking target position G, the end point of the backward trajectory 44 can be brought closer to the parking target position G by moving the candidate turning position toward the parking start position along the forward trajectory. On the other hand, when the end point of the backward trajectory 44 of the candidate turning position selected in S8 is shifted to the left with respect to the parking target position G, the end point of the backward trajectory 44 can be brought closer to the parking target position G by moving the candidate turning position away from (forward of) the parking start position along the forward trajectory.

In S5 to S9, the recommended turning position is determined by comparing the backward trajectory 44 for each of the candidate turning positions. However, as described above, the candidate turning positions are set on the forward trajectory 41 after the transition to the steady state, and thus regardless of which candidate turning position is used for turning, there is basically no need to perform the stationary steering operation before the start of the backward movement. In S4, the forward trajectory 41 is generated such that the hitch angle does not exceed the limit angle at which the backward movement is performable as long as the traveling is performed along the forward trajectory, and thus the hitch angle at the turning operation time point does not exceed the limit angle no matter which candidate turning position the turning operation is performed at. That is, the trailer 3 can be guided to the parking target position G regardless of which candidate turning position the turning operation is performed at, and since there is basically no need to perform the stationary steering operation before the start of the backward movement, the candidate turning position closest to the parking start position S may be determined as the recommended turning position in order to make the parking trajectory as short as possible.

Subsequently, in S10, the CPU 31 outputs, as information on a recommended travel trajectory of the forward section of the travel trajectory from the parking start position to the parking target position, the forward trajectory 41 of the towing vehicle 2 generated in S4 and the recommended turning position determined in S9 to another ECU. The forward trajectory 41 and the recommended turning position may be displayed on the liquid crystal display 15 to guide the occupant before the parking assistance is started, or vehicle control after S11 may be started without guidance.

Thereafter, the CPU 31 executes the parking assistance of the towing vehicle 2 by controlling each drive unit based on the forward trajectory 41 output in S10 (S11). Specifically, the CPU 31 transmits, to the vehicle control ECU 24 via the CAN, various types of assistance information on automatic driving assistance such as a travel trajectory. The vehicle control ECU 24 executes the automatic driving assistance using the received various types of assistance information. Specifically, the steering wheel is controlled such that the towing vehicle 2 moves along the forward trajectory 41 generated in S4 from the parking start position. In the automatic driving assistance, only the steering operation may be automatically performed, and the accelerator, the brake, and the shift position operation may be manually performed. On the other hand, it is not essential for the towing vehicle 2 to be equipped with the above automatic driving assistance, and the towing vehicle 2 may be a vehicle that can only be driven manually. In this case, instead of the automatic driving assistance, steering operation guidance for traveling along the forward trajectory 41 generated in S4 is performed.

While the parking assistance is being performed on the towing vehicle 2, it is desirable to display the travel trajectory and the current position of the vehicle in a comparable state on the liquid crystal display 15 of the towing vehicle 2 such that the driver can confirm whether the parking operation is being performed in accordance with the generated travel trajectory. Further, an overhead image looking down from above may be generated based on surrounding images captured by cameras installed on the towing vehicle 2 and the trailer 3, and the overhead image may be displayed on the liquid crystal display 15 during the transition to the parking assistance mode.

In the parking assistance, guidance of the recommended turning position determined in S9 is also performed. For example, an icon indicating the recommended turning position may be displayed on the liquid crystal display 15 together with the travel trajectory and the current position of the vehicle. Further, voice guidance for instructing to make a turn at a timing when the vehicle approaches the recommended turning position within a predetermined distance may be output.

Thereafter, in S12, the CPU 31 determines whether a turning operation for switching the vehicle from a forward movable state to a backward movable state is performed. Since the turning operation must be performed manually, the CPU 31 determines that the turning operation is performed when the occupant operates the brake to stop the vehicle and changes the shift position to "R" according to the voice guidance or the screen guidance. When the turning operation is manually performed, a position at which the turning operation is actually performed is not necessarily the same as the recommended turning position determined in S9. However, even when the turning position is beyond the recommended turning position, the hitch angle does not exceed the limit angle at which the backward movement is performable. The recommended turning position is an ideal turning position at which the backward movement can be efficiently performed with minimum necessary steering control, but even when the turning operation is performed at a position other than the recommended turning position, a backward trajectory to the parking target position can be generated by appropriately adding and correcting the steering control.

When it is determined that the turning operation for switching the vehicle from the forward movable state to the backward movable state is performed (S12: YES), the process proceeds to S13. On the other hand, when it is determined that the turning operation is not performed (S12: NO), the process returns to S11.

In S13, the CPU 31 generates the backward trajectory 42 along which the backward movement is performed from a position at which the vehicle is actually stopped after traveling along the travel trajectory in the forward section (hereinafter, referred to as an actual turning position) to the parking target position. As described above, in the present embodiment, the travel trajectory of the trailer 3 is generated instead of the travel trajectory of the towing vehicle 2 for the backward trajectory 42 that is the travel trajectory in the backward section.

Here, the initial curvature of the trajectory of the trailer 3 at the backward movement start time point is determined by the hitch angle at the turning time point at the actual turning position. Thereafter, how the curvature changes depends on the vehicle information of the trailer 3 such as a trailer wheelbase. Accordingly, the calculation of the backward trajectory 42 in S13 is performed particularly by acquiring the hitch angle at the current time when the turning operation is performed, and using the acquired hitch angle and the vehicle information of the trailer 3. The backward trajectory 42 of the trailer 3 generated in S13 is basically a combination of a clothoid curve, an arc curve, and a straight line, and even when the forward trajectory 41 is the same, the shape of the backward trajectory 42 changes as the actual turning position changes. A spline curve may be included.

In order to shorten the entire length of the path required for parking, it is important to increase the curvature of the travel trajectory of the trailer 3 in a short time as much as possible, and the towing vehicle 2 may perform a counter steering operation of intentionally steering in a direction opposite to the original turning direction immediately after the start of the backward movement. On the other hand, it is necessary to bring the hitch angle between the towing vehicle 2 and the trailer 3 closer to 0 degrees when approaching to the parking target position, but in order to shorten the entire length of the path required for parking, rather than gradually decreasing the curvature, it is more effective to maintain the maximum curvature possible until the end, and then quickly decrease the curvature at the end, and thus at the end of the turn, an incremental steering operation may be performed to increase the steering in the turning direction. Therefore, for the backward trajectory 42 in S13, a travel trajectory in the case where the counter steering operation or the incremental steering operation is performed may be generated.

Thereafter, the CPU 31 continuously executes the parking assistance of the towing vehicle 2 by controlling each drive unit based on the backward trajectory 42 calculated in S13 (S14). Specifically, the CPU 31 transmits, to the vehicle control ECU 24 via the CAN, various types of assistance information on the automatic driving assistance such as the travel trajectory calculated in S13. The vehicle control ECU 24 executes the automatic driving assistance using the received various types of assistance information. Specifically, the steering wheel is controlled such that the towing vehicle 2 moves to the parking target position along the backward trajectory 42 generated in S13. When the counter steering operation or the incremental steering operation is performed, control for performing these operations is also performed. When it is necessary to perform stationary steering, the stationary steering operation is also performed before the backward movement is started.

Since the backward trajectory 42 generated in S13 is not the trajectory of the towing vehicle 2 but the trajectory of the trailer 3, it is necessary to calculate the steering angle of the towing vehicle 2 based on the travel trajectory of the trailer 3 in order to perform the driving assistance of the towing vehicle 2 in S14. Therefore, first, the travel trajectory of the towing vehicle 2 may be calculated based on the travel trajectory of the trailer 3, and then the steering angle of the towing vehicle 2 may be calculated, or the steering angle of the towing vehicle 2 may be directly calculated based on the travel trajectory of the trailer 3.

It is not essential for the towing vehicle 2 to be equipped with the above automatic driving assistance, and the towing vehicle 2 may be a vehicle that can only be driven manually. In this case, instead of the automatic driving assistance, the steering operation guidance, the brake, the accelerator, and the shift position operation guidance are performed to travel along the backward trajectory 42 generated in S13.

Finally, when the parking to the parking target position is completed, the parking assistance processing program (Fig. 5) is ended.

The method for generating the forward trajectory 41 described in S4 is an example of the method for determining the forward trajectory 41, and the forward trajectory 41 may be generated by any method as long as, among the forward travel trajectory, the forward trajectory 41 is such that the towing vehicle 2 turns at least in the first direction away from the parking target position, thereafter switches from the first direction to the second direction different from the first direction, and transitions to the steady state without the hitch angle exceeding the limit angle at which the backward movement is performable. The same applies to the method for generating the backward trajectory 42 described in S13, and the backward trajectory 42 may be generated by any method as long as a trajectory along which the backward movement can be performed from the turning position to the parking target position can be generated.

As described in detail above, according to the parking assistance device 1 and the computer program executed by the parking assistance device 1 according to the present embodiment, when assisting parking of the towing vehicle 2 and the trailer 3 to be towed by the towing vehicle 2 in a state where the towing vehicle 2 and the trailer 3 are connected to each other, a parking start position and a parking target position are acquired (S1), and a travel trajectory for parking from the parking start position to the parking target position is generated (S4, S13). The travel trajectory includes a forward section in which a hitch angle, which is a connection angle between the towing vehicle 2 and the trailer 3, is adjusted by moving forward along a forward trajectory from the parking start position, and a backward section in which backward movement is performed to the parking target position after the forward section, a recommended turning position at which a turning operation is recommended to be performed is set on the forward trajectory 41 (S9), and in the generation of the travel trajectory, the forward trajectory 41 is generated such that, when the towing vehicle 2 travels along the forward trajectory 41, the hitch angle does not exceed a limit angle at which the backward movement is performable even at a position beyond the recommended turning position (S4), and thus a forward trajectory can be generated such that a hitch angle does not exceed a limit angle at which backward movement is performable even when an occupant operation is delayed and an actual turning position is beyond a preset recommended turning position. As a result, even when the turning position is beyond the recommended turning position, parking assistance can be continued until parking is completed without being interrupted halfway.

The forward trajectory 41 includes the first forward trajectory 41A along which forward movement is performed with a first direction separated from the parking target position as a turning direction, and the second forward trajectory 41B along which the forward movement is performed with a second direction different from the first direction as the turning direction after the first forward trajectory 41A, and in the generation of the travel trajectory, the forward trajectory is generated such that the hitch angle does not exceed the limit angle by increasing a curvature in the second forward trajectory 41B to reach a maximum curvature, then decreasing the curvature to a predetermined curvature smaller than the maximum curvature, and maintaining the predetermined curvature (S4), and thus a forward trajectory that makes the final curvature smaller than the maximum curvature is obtained. Therefore, a forward trajectory can be generated such that a hitch angle does not exceed a limit angle at which backward movement is performable even when an occupant operation is delayed and an actual turning position is beyond a preset recommended turning position.

The forward trajectory 41 includes the first forward trajectory 41A along which the forward movement is performed with the first direction separated from the parking target position as the turning direction, and the second forward trajectory 41B along which the forward movement is performed with the second direction different from the first direction as the turning direction after the first forward trajectory 41A, and in the generation of the travel trajectory, the forward trajectory is generated such that the hitch angle does not exceed the limit angle by increasing the curvature in the second forward trajectory 41B to reach a predetermined curvature smaller than the maximum curvature and then maintaining the predetermined curvature (S4), and thus steering control in the second forward trajectory is simplified. Therefore, a forward trajectory can be generated such that a hitch angle does not exceed a limit angle at which backward movement is performable even when an occupant operation is delayed and an actual turning position is beyond a preset recommended turning position.

In the generation of the travel trajectory, the forward trajectory is generated such that, as the towing vehicle 2 travels along the forward trajectory, the towing vehicle 2 transitions to a steady state in which a turning center of the towing vehicle 2 and a turning center of the trailer 3 coincide with each other, and thereafter maintains the steady state (S4), and thus when a turn is made after the transition to the steady state, there is no need to perform a stationary steering operation before the start of the backward movement, or even when there is, the stationary steering operation can be performed only to a very small extent. Accordingly, wear of the tire can also be prevented without increasing the load of the power steering.

### Appendix

The above embodiment also discloses the following techniques. In the following description, names or expressions of the corresponding configurations in the embodiment and reference numerals used in the drawings are parenthesized for reference. However, the constituent elements of each technique are not limited to the supplementary notes.

### Technique A

The parking assistance device (1) according to claim 2, in which
in the generation of the travel trajectory (41),
the forward trajectory (41) is generated such that the curvature decreased from the maximum curvature reaches the predetermined curvature at the recommended turning position.

According to this, the forward trajectory can be made as short as possible. As a result, the surrounding space required for parking can be reduced.

### Technique B

The parking assistance device (1) according to claim 1, in which
in the generation of the travel trajectory (41),
a plurality of candidate turning positions are set on the forward trajectory (41),
a backward trajectory is calculated for each of the plurality of candidate turning positions when it is assumed that backward movement is started from the candidate turning position set on the forward trajectory, and
the calculated backward trajectory is compared for each of the plurality of candidate turning positions, and the candidate turning position selected based on a comparison result is set as the recommended turning position.

According to this, the most recommended point at which a turn is made on the forward trajectory can be specified as the recommended turning position. As a result, by making a turn at the recommended turning position, parking to the parking target position can be performed along an ideal trajectory.

### Technique C

The parking assistance device (1) according to claim 2 or 3, in which the predetermined curvature is a curvature obtained by subtracting a curvature margin from the maximum curvature.

According to this, by maintaining the curvature in accordance with a size of the trailer to be towed, the forward trajectory can be generated such that the hitch angle does not exceed the limit angle.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

For example, in the present embodiment, the patterns A to C are exemplified as the method for generating the forward trajectory 41, but the forward trajectory 41 may be generated by a method other than the patterns A to C as long as a trajectory can be generated such that a predetermined curvature (towable backward curvature) smaller than the maximum curvature in the second forward trajectory 41B is finally maintained.

In the present embodiment, the processing of the parking assistance processing program (Fig. 5) is executed by the parking assistance ECU 23 of the parking assistance device 1, and an execution entity can be changed as appropriate. For example, a control unit of the liquid crystal display 15, a vehicle control ECU, a control unit of a navigation device, or other in-vehicle devices may execute the processing.

## Claims

1. A parking assistance device (1) for assisting in parking a towing vehicle (2) and a trailer (3) to be towed by the towing vehicle when the towing vehicle and the trailer are connected to each other, wherein
the parking assistance device
acquires a parking start position and a parking target position,
generates a travel trajectory for parking from the parking start position to the parking target position, the travel trajectory including a forward section in which a hitch angle, which is a connection angle between the towing vehicle and the trailer, is adjusted by moving forward along a forward trajectory (41) from the parking start position, and a backward section in which backward movement is performed to the parking target position after the forward section, and
sets, on the forward trajectory, a recommended turning position at which a turning operation is recommended to be performed, and
in the generation of the travel trajectory, the forward trajectory is generated such that, when the towing vehicle travels along the forward trajectory, the hitch angle does not exceed a limit angle at which the backward movement is performable even at a position beyond the recommended turning position.

2. The parking assistance device according to claim 1, wherein
the forward trajectory includes a first forward trajectory (41A) along which forward movement is performed with a first direction away from the parking target position as a turning direction, and a second forward trajectory (41B) along which the forward movement is performed with a second direction different from the first direction as the turning direction after the first forward trajectory, and
in the generation of the travel trajectory, the forward trajectory is generated such that the hitch angle does not exceed the limit angle by increasing a curvature in the second forward trajectory to reach a maximum curvature, then decreasing the curvature to a predetermined curvature smaller than the maximum curvature, and maintaining the predetermined curvature.

3. The parking assistance device according to claim 1, wherein
the forward trajectory includes a first forward trajectory along which forward movement is performed with a first direction away from the parking target position as a turning direction, and a second forward trajectory along which the forward movement is performed with a second direction different from the first direction as the turning direction after the first forward trajectory, and
in the generation of the travel trajectory, the forward trajectory is generated such that the hitch angle does not exceed the limit angle by increasing a curvature in the second forward trajectory to reach a predetermined curvature smaller than a maximum curvature and then maintaining the predetermined curvature.

4. The parking assistance device according to any one of claims 1 to 3, wherein
in the generation of the travel trajectory, the forward trajectory is generated such that, as the towing vehicle travels along the forward trajectory, the towing vehicle transitions to a steady state in which a turning center of the towing vehicle and a turning center of the trailer coincide with each other, and thereafter maintains the steady state.
